# EUROPÄISCHE PATENTSCHRIFT

(11) **EP 3 457 093 B1**
(45) Veröffentlichungstag und Bekanntmachung des Hinweises auf die Patenterteilung: **24.06.2020**
(21) Anmeldenummer: 18174475.6
(22) Anmeldetag: 28.05.2018
(51) Int. Cl.: G01F 1/684, G01F 5/00

(54) **THERMISCHES GASMESSGERÄT**
THERMAL GAS MEASURING DEVICE
APPAREIL DE MESURE DE GAZ THERMIQUE

(43) Veröffentlichungstag der Anmeldung: 20.03.2019
(73) Patentinhaber: Sensirion AG, 8712 Stäfa (CH)
(72) Erfinder: HORNUNG, Mark, 8712 Stäfa (CH)
(74) Vertreter: Detken, Andreas

(56) Entgegenhaltungen:
- EP-A1- 3 032 227
- WO-A1-2004/090478
- DE-A1-102004 019 521
- DE-A1-102004 021 303
- US-A1- 2004 187 927
- US-B1- 6 655 207

## Beschreibung

### TECHNISCHES GEBIET

Die vorliegende Erfindung betrifft ein thermisches Gasmessgerät zur Ermittlung mindestens einer Kenngrösse eines brennbaren Gases, insbesondere Erdgas. Die Kenngrösse kann z.B. die in einem bestimmten Zeitraum durch das Gasmessgerät durchgesetzte Gasmenge ein; in diesem Fall spricht man auch von einem Gaszähler. Die Kenngrösse kann aber auch eine Eigenschaft des Gases selbst sein, z.B. eine vom Brennwert beeinflusste Grösse wie der auf die Masse oder das Volumen bezogene Brennwert, die Methanzahl oder der Wobbe-Index. Als thermisches Gasmessgerät wird dabei ein Gasmessgerät bezeichnet, das auf einem thermischen Messprinzip basiert.

### STAND DER TECHNIK

In Gebäuden kommen häufig Gaszähler zum Einsatz, um den Verbrauch von brennbaren Gasen wie Erdgas zu messen. Ein Gaszähler weist ein Gaszählergehäuse auf, das einen Einlass für das einströmende Gas und einen Auslass für das ausströmende Gas definiert. Das Gaszählergehäuse ist meist sehr widerstandsfähig konstruiert, da das Gaszählergehäuse im Brandfall höheren Temperaturen standhalten muss. So darf im Brandfall nur ein kleiner maximaler Leckagefluss aus dem Gaszählergehäuse austreten (definiert z.B. in DIN 3374:1985-07 bzw. DIN EN 1359:2017-11). Aus Sicherheitsgründen besteht das Gaszählergehäuse daher in der Regel aus Metall. Ein Beispiel für ein Gaszählergehäuse ist z.B. in EP 2 824 432 A2 angegeben.

In Hausinstallationen wird zwischen Einstutzen- und Zweistutzenanschlüssen unterschieden. Bei einem Zweistutzenanschluss sind Einlass und Auslass als räumlich getrennte Rohrstutzen ausgebildet, und an jedem dieser Rohrstutzen ist jeweils ein Anschlusselement ausgebildet, z.B. ein Gewinde, ein Ringflansch oder eine andere Art von Anschlusselement, mit dem eine zuverlässig dichte und manipulationssichere Verbindung zu einer Gasleitung geschaffen werden kann. Insbesondere ist als Anschlusselement ein Aussengewinde weit verbreitet. Zweistutzenanschlüsse sind in DIN 3376-1:2005-02 genormt, und es wird auf den Inhalt dieser Norm verwiesen. Bei einem Einstutzenanschluss ist ein einziger Rohrstutzen vorhanden, an dem ein oder mehrere Anschlusselemente ausgebildet sind. Die Trennung von Einlass und Auslass erfolgt innerhalb des Rohrstutzens. Als Anschlusselemente sind ein sich radial nach aussen erstreckender Ringflansch in Kombination mit einem Innengewinde verbreitet. Einstutzenanschlüsse sind in DIN 3376-2:2005-02 genormt, und es wird auf den Inhalt dieser Norm verwiesen.

In dem Gaszählergehäuse ist eine Durchflussmessanordnung untergebracht. Für die Durchflussmessanordnung sind verschiedene Messprinzipien bekannt, darunter rein mechanische Messprinzipien (z.B. Balgengaszähler, Drehkolbenzähler oder Turbinenradzähler) und elektronisch unterstützte Messprinzipien (z.B. Ultraschallzähler, Corioliszähler oder thermische Gaszähler).

Bei thermischen Gaszählern wird eine Messung meist nur an einem Teilstrom des gesamten Gasstroms durchgeführt. Die Durchflussmessanordnung definiert dazu einen Hauptkanal, durch den der grösste Teil des Gasstroms geleitet wird, sowie einen Bypasskanal. Im Hauptkanal befindet sich ein Strömungswiderstandselement, das eine Druckdifferenz erzeugt, die von der Durchflussrate durch das Strömungswiderstandselement abhängt. Der Bypasskanal zweigt stromaufwärts vom Strömungswiderstandselement aus dem Hauptkanal ab und mündet im Bereich des Strömungswiderstandselements oder stromabwärts vom Strömungswiderstandselement wieder in den Hauptkanal. Im Bypasskanal ist ein thermisches Sensorelement angeordnet. Ein Beispiel für eine solche Durchflussmessanordnung ist in WO 2012/021999 A1 angegeben.

Normalerweise befindet sich die gesamte Durchflussmessanordnung, einschliesslich des eigentlichen Sensorelements, im gasführenden Bereich. Sofern elektrische Signale mit einem Sensorelement ausgetauscht werden, werden die dazu benötigten Leitungen über eine elektrische Durchführung durch die Gehäusewand vom gasführenden Bereich in den Aussenraum des Gaszählergehäuses (im Folgenden auch als Luftbereich bezeichnet) geführt. Im Luftbereich befindet sich dann typischerweise die Systemelektronik zur Datenverarbeitung und Auslesung des Zählerstands.

Die Konstruktion der elektrischen Durchführung durch die Gehäusewand kann sehr aufwändig sein, da jeder einzelne Kontakt der elektrischen Durchführung gegenüber dem Gaszählergehäuse elektrisch isoliert sein muss und im Brandfall hohen Temperaturen standhalten muss. Zudem gestaltet sich die Wartung der Durchflussmessanordnung sehr aufwändig. Wenn das Sensorelement defekt ist, ist ein Austausch des Sensorelements nur möglich, indem das Gaszählergehäuse geöffnet wird und das Sensorelement von den elektrischen Verbindungsleitungen getrennt wird.

Es ist bekannt, anstelle der Durchflussrate oder zusätzlich hierzu andere Kenngrössen eines Gases zu bestimmen, das durch einen Gaszähler fliesst, insbesondere eine Grösse, die mit dem Brennwert korreliert, wie den auf die Masse oder das Volumen bezogenen Brennwert, die Methanzahl oder den Wobbe-Index. Ein Beispiel ist in EP 3 153 854 A1 offenbart.

EP 3 032 227 A1 offenbart ein gekapseltes Durchflusssensormodul zur Messung einer Durchflussrate eines beliebigen Fluids. Das Modul weist ein geschlossenes Gehäuse auf, an dem ein Einlassrohr ausgebildet ist, auf das ein Einlassschlauch aufgesteckt werden kann, sowie ein Auslassrohr, auf das ein Auslassschlauch aufgesteckt werden kann. Das Modul kann auf einem Träger wie z.B. einer gedruckten Leiterplatte (PCB) montiert werden. Konstruktionsbedingt eignet sich dieses Modul nur zur Messung relativ kleiner Durchflussraten. Eine Anwendung in einem Gaszähler ist nicht offenbart.

DE 10 2004 021 303 A1 offenbart ein Durchflussmessgerät zur Messung der Durchflussrate eines Fluids in einem Hauptströmungsrohr mittels eines an einem Bypasskanal angeordneten Durchflusssensors. Die Begrenzungsflächen des Bypasskanals verlaufen teilweise an oder in einem separaten Kanalträgerteil und teilweise an oder in der Wand der Hauptströmungsrohres.

### DARSTELLUNG DER ERFINDUNG

Es ist eine Aufgabe der vorliegenden Erfindung, eine Gasmessgerät anzugeben, das eine einfache und kostengünstige Fertigung und eine leichte Wartung ermöglicht und das dennoch geeignet ist, die hohen Anforderungen der einschlägigen Brandschutzbestimmungen zu erfüllen.

Diese Aufgabe wird durch ein Gasmessgerät gemäss Anspruch 1 gelöst. Weitere Ausführungsformen sind in den abhängigen Ansprüchen angegeben.

Es wird also ein Gasmessgerät für ein brennbares Gas, insbesondere Erdgas, offenbart, welches aufweist:
ein Hauptgehäuse, welches einen Gaseinlass und einen Gasauslass für das Gas definiert und zwischen dem Gaseinlass und dem Gasauslass ein Gehäuseinneres begrenzt;
mindestens ein Anschlusselement, das am Hauptgehäuse angeordnet ist, um den Gaseinlass mit einer Gaseinlassleitung und den Gasauslass mit einer Gasauslassleitung zu verbinden;
ein Strömungswiderstandselement, das zwischen dem Gaseinlass und dem Gasauslass im Gehäuseinneren angeordnet ist und einen Hauptkanal für das durch das Gehäuseinnere strömende Gas begrenzt;
einen Bypasskanal, der stromaufwärts vom Strömungswiderstandselement aus dem Hauptkanal abzweigt und im Bereich des Strömungswiderstandselements oder stromabwärts davon in den Hauptkanal zurück mündet;
einen thermischen Durchflusssensor, um mindestens eine Kenngrösse des durch das Hauptgehäuse hindurch fliessenden brennbaren Gases zu bestimmen, wobei der thermische Durchflusssensor angrenzend an den Bypasskanal angeordnet ist, derart, dass das durch den Bypasskanal fliessende Gas über den Durchflusssensor hinwegstreicht.
wobei das Hauptgehäuse, vorzugsweise stromaufwärts vom Strömungswiderstandselement, eine erste Bypassöffnung und, vorzugsweise stromabwärts vom Strömungswiderstandselement, eine zweite Bypassöffnung aufweist,
wobei der Bypasskanal zwischen der ersten und zweiten Bypassöffnung ausserhalb des Hauptgehäuses verläuft, und
wobei der thermische Durchflusssensor ausserhalb des Hauptgehäuses angeordnet ist.

Auf diese Weise kann eine teure und aufwändige Durchführung für elektrische Leitungen durch die Gehäusewand entfallen. Stattdessen werden lediglich zwei einfache Öffnungen in der Gehäusewand benötigt, um den Bypasskanal aus dem Gehäuseinneren herauszuführen. Zudem ist auf diese Weise der Durchflusssensor zugänglich, ohne das aufwändig gedichtete Hauptgehäuse zu öffnen. Dadurch wird im Falle eines Defekts ein Austausch des Durchflusssensors erleichtert. Des Weiteren ist die Gefahr von Korrosion der elektrischen Kontakte des Durchflusssensors durch das brennbare Gas vermindert, da sich diese Kontakte nun ausserhalb des gasführenden Bereichs im Luftraum befinden.

Bei der Kenngrösse, die mit dem thermischen Durchflusssensor bestimmt wird, kann es sich insbesondere um eine Durchflusskenngrösse oder um eine Kenngrösse, die mit dem Brennwert des brennbaren Gases korreliert, handeln. Unter einer Durchflusskenngrösse wird dabei eine Kenngrösse verstanden, die Rückschluss auf eine Durchflussrate durch den Gaszähler, insbesondere auf den Volumen- oder Massenstrom durch den Gaszähler, oder auf eine in einem bestimmten Zeitraum durchgesetzte Gasmenge durch den Gaszähler erlaubt. Eine Kenngrösse, die mit dem Brennwert des brennbaren Gases korreliert, kann insbesondere der massenbezogene oder volumetrische Brennwert, der Wobbe-Index oder die Methanzahl sein.

Das Hauptgehäuse ist vorzugsweise sehr beständig konstruiert und erfüllt die einschlägigen Normen für Gaszähler, insbesondere die Brandschutznormen der DIN 3374:1985-07 bzw. DIN EN 1359:2017-11. Konkret ist es bevorzugt, wenn das Hauptgehäuse so konstruiert ist, dass der Leckagefluss maximal 20 Liter pro Stunde beträgt, wenn das Gasmessgerät während 15 Minuten auf 650 °C aufgeheizt und während 30 Minuten bei dieser Temperatur gehalten wurde, wie dies in DIN 3374:1985-07 gefordert ist. Um die Brandschutzvorschriften zu erfüllen, ist es insbesondere bevorzugt, wenn das Hauptgehäuse mindestens in denjenigen Bereichen, die unmittelbar das Gehäuseinnere begrenzen, aus Metall gefertigt ist. Vorteilhaft besteht das Hauptgehäuse im Wesentlichen vollständig aus Metall.

Um den Leckagefluss im Brandfall zu minimieren, ist es von Vorteil, wenn die erste und die zweite Bypassöffnung jeweils eine sehr kleine Querschnittsfläche aufweisen. Insbesondere ist es von Vorteil, wenn jede dieser Öffnungen jeweils eine lichte Querschnittsfläche von höchstens 0.8 mm² (entsprechend einem Durchmesser von höchstens 1 mm bei kreisscheibenförmiger Querschnittsfläche), vorzugsweise höchstens 0.2 mm² (entsprechend einem Durchmesser von maximal 0.5 mm bei kreisscheibenförmiger Querschnittsfläche) aufweist.

Die erste und/oder zweite Bypassöffnung hat vorzugweise die Form einer einfachen Bohrung in einer äusseren Begrenzungswand des Hauptgehäuses. In anderen Worten ist die äussere Begrenzungswand des Hauptgehäuses angrenzend an die erste und zweite Bypassöffnung vorzugsweise im Wesentlichen eben, und zwar sowohl innenseitig wie auch aussenseitig. Präziser ausgedrückt, weist das Hauptgehäuse vorzugsweise eine Begrenzungswand auf, die ein Wandinnenfläche und eine Wandaussenfläche definiert, wobei die erste und/oder zweite Bypassöffnung durch die Begrenzungswand hindurch verläuft, und wobei die Wandinnenfläche und die Wandaussenfläche unmittelbar angrenzend an die erste und/oder zweite Bypassöffnung keine Erhebungen oder Vertiefungen aufweisen.

In vorteilhaften Ausgestaltungen ist der Durchflusssensor in einem separaten Sensormodul untergebracht, das ein Bypassgehäuse bildet. Das Gasmessgerät umfasst in diesem Fall also ein Bypassgehäuse, das separat vom Hauptgehäuse ausgebildet ist, wobei der Bypasskanal durch das Bypassgehäuse hindurch verläuft, und wobei der Durchflusssensor im Bypassgehäuse aufgenommen ist. Auf diese Weise werden der Aufbau und die Wartung nochmals erleichtert. Insbesondere kann im Fall eines Defekts das Sensormodul einfach vom Hauptgehäuse abgenommen und durch ein neues Sensormodul ersetzt werden.

Da der Bypassstrom sehr klein gewählt werden kann, braucht das Bypassgehäuse die einschlägigen Brandschutzvorschriften nicht in gleichem Masse wie das Hauptgehäuse zu erfüllen. Dadurch kann das Bypassgehäuse mindestens teilweise aus Kunststoff gefertigt werden und braucht keine Metallummantelung aufzuweisen.

Um das Bypassgehäuse gegenüber dem Hauptgehäuse sicher abzudichten, kann das Gasmessgerät zwischen dem Bypassgehäuse und dem Hauptgehäuse im Bereich der ersten und/oder zweiten Bypassöffnung jeweils mindestens ein Dichtelement aufweisen, z.B. einen O-Ring oder ein anderes die jeweilige Bypassöffnung umgebendes Dichtelement.

Das Bypassgehäuse kann ein Einlassrohr aufweisen, welches einen Bypasseinlass des Bypasskanals begrenzt und dazu ausgebildet ist, mit der ersten Bypassöffnung des Hauptgehäuses verbunden zu werden, und/oder es kann ein Auslassrohr aufweisen, welches einen Bypassauslass des Bypasskanals begrenzt und dazu ausgebildet ist, mit der zweiten Bypassöffnung des Hauptgehäuses verbunden zu werden. Insbesondere ist es denkbar, dass das Einlass- bzw. Auslassrohr in die entsprechende Bypassöffnung oder in ein darin angeordnetes Aufnahmeelement eingesteckt wird.

Der Gaszähler weist mindestens ein Durchströmungselement auf, wobei dieses Durchströmungselement derart innerhalb des Hauptgehäuses angeordnet ist, dass das gesamte durch das Gasmessgerät durchgesetzte brennbare Gas mindestens einen Abschnitt des Durchströmungselements durchströmt. Das Durchströmungselement enthält das Strömungswiderstandselement. Es kann einstückig mit diesem ausgebildet sein, oder das Strömungswiderstandselement kann ein separates Bauteil sein, das im Durchströmungselement aufgenommen ist.

Um den Bypassstrom aus dem Durchströmungselement abzuzweigen, weist das Durchströmungselement stromaufwärts vom Strömungswiderstandselement eine Austrittsöffnung auf, um einen Austritt eines Bypassstroms aus dem Durchströmungselement zum Bypasskanal zu erlauben, und es weist im Bereich des Strömungswiderstandselements oder stromabwärts vom Strömungswiderstandselement eine Eintrittsöffnung auf, um einen Wiedereintritt des Bypassstroms vom Bypasskanal ins Durchströmungselement zu erlauben. Die Austrittsöffnung und die Eintrittsöffnung können jeweils in einem Mantelwandbereich des Durchströmungselements ausgebildet sein.

Zwischen dem Durchströmungselement und dem Hauptgehäuse kann in den Bereichen der Austrittsöffnung und/oder der Eintrittsöffnung jeweils mindestens ein Dichtelement vorgesehen sein, um hier das Durchströmungselement und das Hauptgehäuse gegeneinander abzudichten. Das Dichtelement kann umlaufend um die jeweilige Öffnung ausgebildet sein.

Der thermische Durchflusssensor kann in an sich bekannter Weise ein Heizelement sowie zwei Temperaturfühler umfassen, wobei einer der Temperaturfühler stromaufwärts und der andere Temperaturfühler stromabwärts vom Heizelement im Bypasskanal angeordnet ist. Aus einer Messung der Temperaturdifferenz zwischen den beiden Temperaturfühlern kann auf die Durchflussmenge geschlossen werden. Beim thermischen Durchflusssensor handelt es sich bevorzugt um einen mikrothermischen Durchflusssensor, d.h. das Heizelement und die beiden Temperaturfühler erstrecken sich entlang der Strömungsrichtung insgesamt über einen Bereich von nicht mehr als 2 mm, vorzugsweise nicht mehr als 1 mm. Das Heizelement, die beiden Temperaturfühler sowie die zugehörige Ansteuerungselektronik können in an sich bekannter Weise auf einem gemeinsamen Sensorchip integriert sein. Das Gasmessgerät kann mindestens einen elektronischen Schaltkreis zur Auswertung von Signalen des thermischen Durchflusssensors aufweisen, wobei der elektronische Schaltkreis insbesondere eine der folgenden Vorrichtungen umfassen kann: ein Datenspeicherelement, in dem Kalibrationsdaten gespeichert sind; eine Integrationsvorrichtung zur Integration von Durchflusssignalen; eine Berechnungsvorrichtung zur Berechnung einer Grösse, die mit dem Brennwert des Gases korreliert; und/oder eine Datenkommunikationsvorrichtung zur drahtgebundenen oder drahtlosen Datenkommunikation. Die Kalibrationsdaten können insbesondere Daten über das Strömungswiderstandselement umfassen.

Der Durchflusssensor und der elektronische Schaltkreis können ausserhalb des Hauptgehäuses auf einer gemeinsamen Leiterplatte montiert sein. Dies ist nur deshalb möglich, weil sich der Durchflusssensor ausserhalb des Hauptgehäuses befindet. Ein Teil des elektronischen Schaltkreises kann auch auf dem Sensorchip integriert sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind.
- Fig. 1: zeigt in schematischer Form einen Gaszähler, der gemäss dem Stand der Technik aufgebaut ist;
- Fig. 2: zeigt in schematischer Form ein Gasmessgerät gemäss einem Beispiel, das nicht Teil der Erfindung ist;

- Fig. 3: zeigt in schematischer Form ein Gasmessgerät gemäss einer ersten Ausführungsform der Erfindung;
- Fig. 4: zeigt in schematischer Form ein Gasmessgerät gemäss einer zweiten Ausführungsform der Erfindung;
- Fig. 5: zeigt in einer perspektivischen Ansicht von schräg oben eine mögliche Ausführungsform eines Sensormoduls, das sich zum Einsatz an einem Gasmessgerät gemäss der vorliegenden Erfindung eignet;
- Fig. 6: zeigt das Sensormodul der Fig. 5 in einer perspektivischen Ansicht von schräg unten;
- Fig. 7: zeigt die Abdeckung des Sensormoduls der Fig. 5 in einer perspektivischen Ansicht von schräg unten;
- Fig. 8: zeigt ein Drahtgittermodell der Abdeckung der Fig. 7, um die im Inneren der Abdeckung verlaufenden Kanäle erkennbar zu machen;
- Fig. 9: zeigt einen Träger des Sensormoduls der Fig. 5 in einer perspektivischen Ansicht von schräg oben;
- Fig. 10: zeigt den Träger der Fig. 9 in einer perspektivischen Ansicht von schräg unten;
- Fig. 11: zeigt in schematischer Form eine Leiterplatte mit darauf montierten Sensormodul und Auswerteelektronik; und
- Fig. 12: zeigt in einer perspektivischen Ansicht von schräg oben eine andere mögliche Ausführung eines Sensormoduls.

### BESCHREIBUNG BEVORZUGTER AUSFÜHRUNGSFORMEN

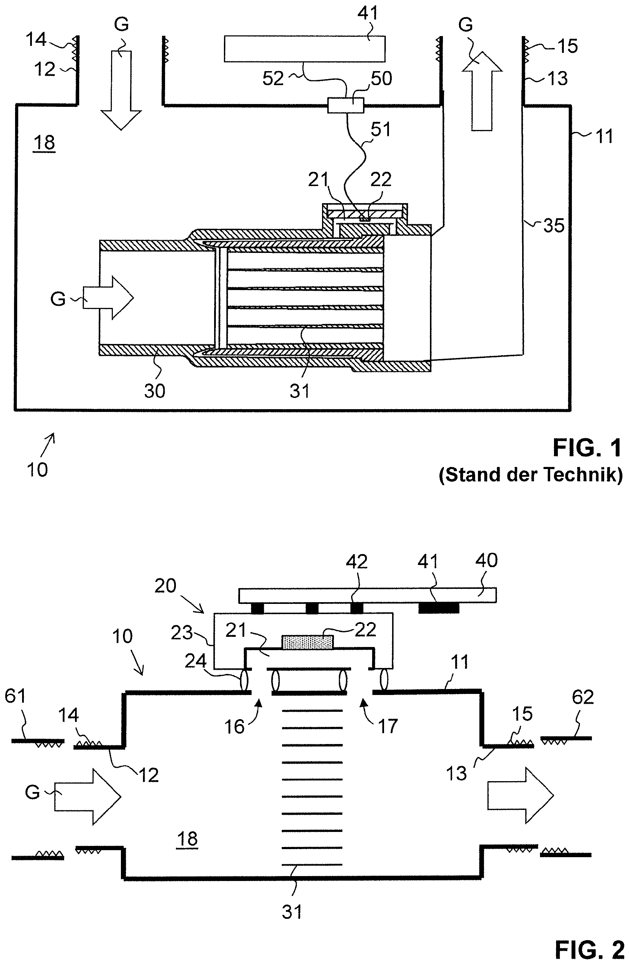

In der Figur 1 ist in schematischer Form ein Gaszähler illustriert, der gemäss dem Stand der Technik aufgebaut ist. Der Gaszähler weist ein robustes Gaszählergehäuse 10 aus Metall (nachstehend synonym auch als Hauptgehäuse bezeichnet) auf, welches mit seiner Gehäusewand 11 einen Innenraum 18 definiert. Das Gaszählergehäuse 10 weist einen Einlass 12 und einen Auslass 13 für ein brennbares Gas G auf. Das Gas G tritt am Einlass 12 in den Innenraum 18 des Gaszählergehäuses 10 ein und verlässt den Innenraum 18 durch den Auslass 13. Der Einlass 12 und der Auslass 13 sind in an sich bekannter Weise mit Anschlusselementen in Form eines Einlassgewindes 14 und eines Auslassgewindes 15 versehen, um entsprechende Gasleitungen am Gaszähler anzuschliessen.

Im Innenraum 18 des Gaszählergehäuses 10 ist ein rohrförmiges Durchströmungselement 30 aus Kunststoff angeordnet, welches einen Hauptkanal definiert. Das Durchströmungselement 30 ist mittels eines Adapterstücks 35, welches ebenfalls aus Kunststoff gefertigt ist, im Gaszählergehäuse 10 gehalten. Das rohrförmige Adapterstück 35 verbindet den Ausgang des Durchströmungselements 30 mit dem Auslass 13 des Gaszählergehäuses. Das gesamte Gas G, welches in das Gehäuseinnere 18 eintritt, durchströmt das Durchströmungselement 30 und das Adapterstück 35. Im Hauptkanal ist ein Strömungswiderstandselement 31 angeordnet, welches im vorliegenden Beispiel durch eine Vielzahl paralleler Rohre mit reduziertem und sich in Strömungsrichtung leicht verjüngendem Querschnitt gebildet ist. Stromaufwärts vom Strömungswiderstandselement 31 zweigt aus dem Hauptkanal ein Bypasskanal 21 ab. Der Bypasskanal 21 mündet stromabwärts vom Strömungswiderstandselement 31 wieder zurück in den Hauptkanal. Ein kleiner Teil des Gases G durchströmt auf diese Weise den Bypasskanal 21 und bildet einen Bypassstrom. Ein derartiges Durchströmungselement 30 ist z.B. aus WO 2012/021999 A1 bekannt, und für weitere Details wird auf dieses Dokument verwiesen.

Seitlich angrenzend an den Bypasskanal 21 befindet ein thermischer Durchflusssensor 22, derart, dass der durch den Bypasskanal fliessende Bypassstrom über den Durchflusssensor 22 hinwegstreicht. Um den Durchflusssensor 22 mit elektrischem Strom zu versorgen und auszulesen, sind elektrische Leitungen 51 vorhanden, die den Durchflusssensor 22 mit einer elektrischen Durchführung 50 in der Gehäusewand 11 verbinden. Bei der elektrischen Durchführung 50 kann es sich z.B. um eine Buchse eines Steckverbinders handeln, mit der die Leitungen 51 verlötet sind, wobei von aussen ein passender Stecker in die Buchse gesteckt werden kann. Von der elektrischen Durchführung 50 erstrecken sich weitere elektrische Leitungen 52 zu einer Auswerteelektronik 41.

Da das Gaszählergehäuse 10 absolut gasdicht sein muss, muss auch die elektrische Durchführung 50 aufwändig gedichtet sein. Zudem muss die Durchführung 50 im Brandfall hohen Temperaturen standhalten können. Dies macht die Konstruktion der Durchführung 50 sehr aufwändig und teuer. Ein weiterer Nachteil des Gaszählers der Figur 1 besteht darin, dass der Durchflusssensor 20 im Falle eines Defekts schlecht zugänglich ist. Um den Durchflusssensor 20 auszutauschen, muss einerseits das aufwändig gedichtete Gaszählergehäuse 10 geöffnet werden, und andererseits müssen die elektrischen Verbindungen mit den Leitungen 51 gelöst werden.

Diese Nachteile werden bei einem Gasmessgerät gemäss der vorliegenden Erfindung vermieden. In der Figur 2 ist ein erstes Beispiel eines solchen Gasmessgeräts, das nicht Teil der Erfindung ist, schematisch illustriert. Ähnlich wirkende Teile sind mit den gleichen Bezugszeichen wie in der Figur 1 versehen. Das Gasmessgerät weist wiederum ein robustes Hauptgehäuse 10 aus Metall mit Gehäusewand 11, Einlass 12 und Auslass 13 auf. Am Einlass 12 ist ein Einlassgewinde 14 in Form eines Aussengewindes ausgebildet. Das Einlassgewinde 14 dient als Anschlusselement für eine Gaseinlassleitung 61, die mit einem entsprechenden Innengewinde versehen ist. Entsprechend ist am Auslass 13 ein Auslassgewinde 15 zur Verbindung mit einer Gasauslassleitung 62 vorhanden.

Im Innenraum des Hauptgehäuses 10 ist ein Strömungswiderstandselement 31 aus Kunststoff angeordnet, das sich über den gesamten Querschnitt des Hauptgehäuses 10 hinweg erstreckt. Stromaufwärts vom Strömungswiderstandselement 31 ist in der Gehäusewand 11 eine erste Bypassöffnung 16 ausgebildet. Stromabwärts vom Strömungswiderstandselement 31 befindet sich in der Gehäusewand eine zweite Bypassöffnung 17. Jede der Bypassöffnungen 16, 17 ist im Querschnitt kreisscheibenförmig mit einem Durchmesser von höchstens 1 mm.

Im Bereich über diesen Öffnungen ist am Hauptgehäuse 10 ein Sensormodul 20 angebracht, das ein Bypassgehäuse 23 umfasst. Das Bypassgehäuse 23 begrenzt einen Bypasskanal 21. Dieser verläuft zwischen einem Bypasseinlass und einem Bypassauslass des Bypassgehäuses 23 vollständig im Inneren des Bypassgehäuses 23. Innerhalb des Bypassgehäuses 23 ist angrenzend an den Bypasskanal 21 ein thermischer Durchflusssensor 22 angeordnet, so dass der durch den Bypasskanal fliessende Bypassstrom über den Durchflusssensor 22 hinwegstreicht.

Der Bypasseinlass des Sensormoduls 20 ist über der ersten Bypassöffnung 16 des Hauptgehäuses 10 angeordnet, und der Bypassauslass des Sensormodul 20 ist über der zweiten Bypassöffnung 17 angeordnet. Zwischen dem Hauptgehäuse 10 und dem Bypassgehäuse 23 sind um die Bypassöffnungen 16, 17 herum umlaufende Dichtelemente 24 angeordnet, um zu verhindern, dass hier ein Teil des brennbaren Gases entweichen kann.

Über Kontaktelemente 42 ist das Sensormodul 20 direkt elektrisch mit einer Leiterplatte 40 verbunden, welche eine nur stark schematisch dargestellte Auswerteelektronik 41 mit elektronischen Schaltkreisen zur Datenverarbeitung und Datenkommunikation trägt. Insbesondere kann die Auswerteelektronik 41 ein Speicherelement umfassen, in dem Kalibrationsdaten gespeichert sind, wobei diese Kalibrationsdaten insbesondere von den Eingenschaften des Strömungswiderstandselements 31 abhängen können. Die Auswerteelektronik 41 kann ausserdem eine Integrationsvorrichtung umfassen, um eine mit dem Durchflusssensor 22 gemessene Durchflussrate zeitlich zu integrieren und so die gesamte Gasmenge zu bestimmen, die das Gasmessgerät in einem gewissen Zeitraum durchsetzt hat. Alternativ oder zusätzlich kann die Auswerteelektronik 41 dazu ausgebildet sein, eine Grösse zu bestimmen, die mit dem Brennwert des Gases korreliert. Des Weiteren kann die Auswerteelektronik 41 eine drahtgebundene oder drahtlose Datenkommunikationsvorrichtung umfassen, um die Durchflussrate oder die durch Integration ermittelte Gasmenge auszulesen.

Anders als Stand der Technik ist der Durchflusssensor 22 nun ausserhalb des Gaszählergehäuses 10 im Luftraum angeordnet. Dies bringt gleich mehrere Vorteile mit sich. Zum einen wird der Austausch des Durchflusssensors 22 im Falle eines Defekts bedeutend erleichtert. Zum anderen befinden sich die elektrischen Kontakte zur Ansteuerung aus Auslesung des Durchflusssensors 22 nun im Luftraum und sind dadurch vor Korrosion durch das möglicherweise korrosiv wirkende brennbare Gas G geschützt. Schliesslich kann eine aufwändige elektrische Durchführung durch die Gehäusewand 11 hindurch entfallen. Stattdessen werden lediglich zwei kleine Bypassöffnungen 16, 17 in der Gehäusewand 11 benötigt. Sämtliche elektrischen Verbindungen zur Auswerteelektronik 41 erfolgen im Luftraum. Diese Verbindungen können sehr kurz gehalten werden. Insbesondere kann das Sensormodul 20 direkt auf der Leiterplatte 40, welche auch die Auswerteelektronik 41 trägt, montiert werden. Während das Hauptgehäuse aus Brandschutzgründen vorzugsweise zumindest innenwandig aus Metall besteht, kann das Gehäuse des Sensormoduls 20 aus Kunststoff gefertigt sein, und eine Metallumhausung ist nicht nötig.

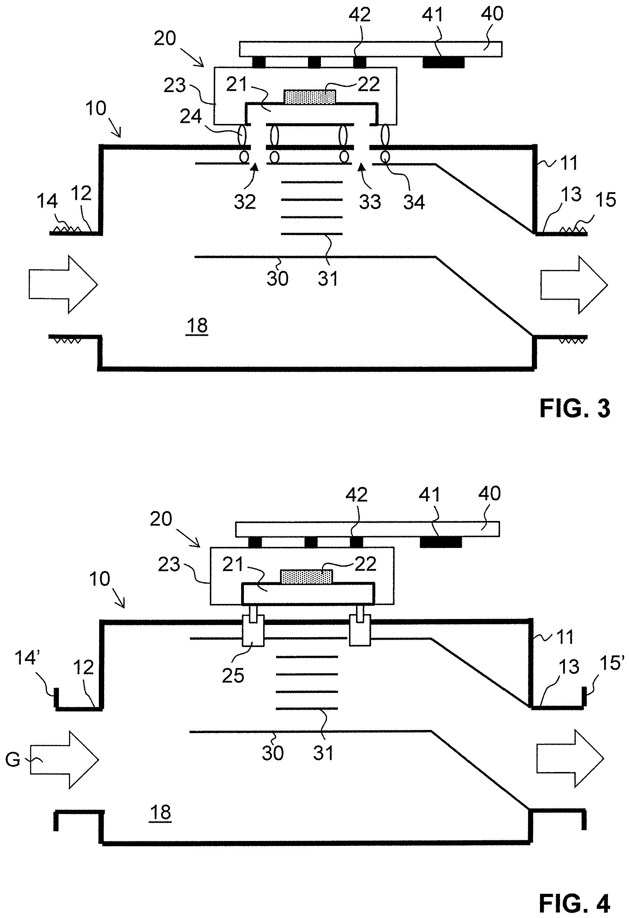

In der Figur 3 ist ein erstes Ausführungsbeispiel schematisch illustriert. In dieser Ausführungsform ist im Innenraum 18 des Hauptgehäuses 10 ein rohrförmiges Durchströmungselement 30 angeordnet, das in seinem Inneren das Strömungswiderstandselement 31 aufnimmt. Das Durchströmungselement 30 weist in seiner Mantelwand stromaufwärts vom Strömungswiderstandselement 31 eine Austrittsöffnung 32 auf, um den Austritt von Gas durch die Mantelwand des Durchströmungselements 30 und durch die erste Bypassöffnung in der Gehäusewand 10 hindurch in den Bypasskanal 21 hinein zu ermöglichen. Das Durchströmungselement 30 weist des weiteren in seiner Mantelwand stromabwärts vom Strömungswiderstandselement 31 eine Eintrittsöffnung 33 auf, um den Wiedereintritt von Gas aus dem Bypasskanal 21 durch die zweite Bypassöffnung in der Gehäusewand in das Durchströmungselement 30 hinein zu ermöglichen. Im Bereich der Austrittsöffnung 32 und der Eintrittsöffnung 33 ist zwischen dem Durchströmungselement 30 und der Gehäusewand 11 jeweils ein ringförmiges Dichtelement 34 in Form eines O-Rings angeordnet. Stromabwärts von der Eintrittsöffnung 33 mündet das Durchströmungselement 30 in den Auslass 13 des Hauptgehäuses 10.

Ein zweites Ausführungsbeispiel ist in der Figur 4 schematisch illustriert. In diesem Beispiel ist in der ersten Bypassöffnung der Gehäusewand 11 und in der Auslassöffnung der Mantelwand des Durchströmungselements 30 ein erster Einsatz 25 angeordnet, der eine Steckaufnahme für ein Einlassrohr 26 des Sensormoduls 20 bildet. Entsprechend ist ein zweiter Einsatz in der zweiten Bypassöffnung der Gehäusewand 11 und in der Einlassöffnung der Mantelwand des Durchströmungselements 30 angeordnet. Auf diese Weise kann das Sensormodul 20 sehr einfach mit dem Hauptgehäuse 10 verbunden bzw. von diesem entfernt werden.

Anders als im ersten Ausführungsbeispiel sind die Verbindungselemente zur Verbindung des Gasmessgeräts mit einer Gaseinlassleitung und einer Gasauslassleitung in der zweiten Ausführungsform nicht als Aussengewinde, sondern als radial abstehende, umlaufende Flansche ausgestaltet. Selbstverständlich sind auch andere Ausgestaltungen möglich, insbesondere auch Ausgestaltungen als Einstutzenanschluss nach DIN 3376-2:2005-02.

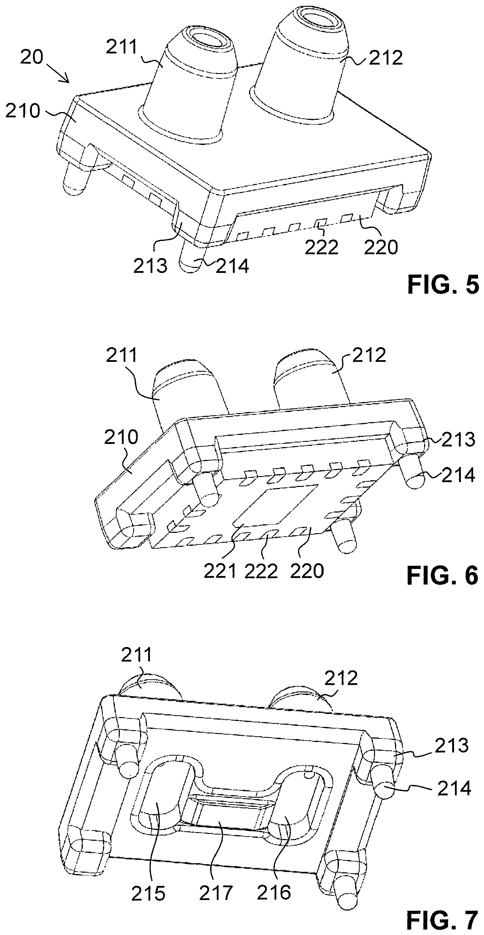

In den Figuren 5 und 6 ist eine mögliche Ausführungsform eines Sensormoduls 20 dargestellt, das sich für den Einsatz in einem erfindungsgemässen Gasmessgerät eignet. Der Aufbau dieses Sensormoduls wird in EP 3 032 227 A1 detailliert beschrieben, und es wird auf jenes Dokument verwiesen. Im Folgenden sollen lediglich die wichtigsten Eigenschaften des Sensormoduls 20 gemäss dieser Ausführungsform beschrieben werden, soweit sie für die vorliegende Erfindung von Bedeutung sind.

Das Sensormodul 20 gemäss Figuren 5 und 6 umfasst zwei Teile, nämlich eine Abdeckung 210 und einen Sensorträger 220. Diese beiden Teile bilden gemeinsam ein Sensorgehäuse, das den Bypasskanal 21 begrenzt und den Durchflusssensor 22 enthält.

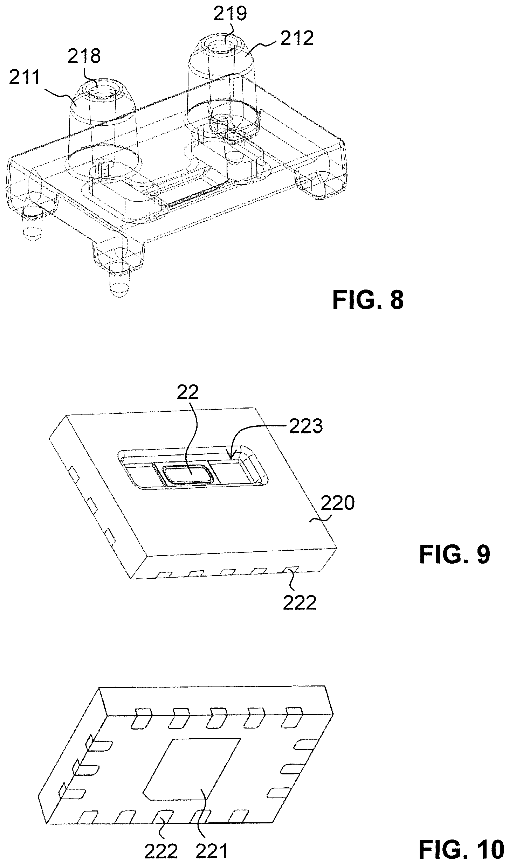

Die Abdeckung 210 ist in den Figuren 7 und 8 alleine dargestellt. Sie hat eine quaderförmige Grundform. Sie weist auf ihrer Oberseite ein Einlassrohr 211 und ein Auslassrohr 212 auf. Das Einlassrohr 211 definiert einen Bypasseinlass 218 (siehe Figur 8), welcher in einen ersten Hohlraum 215 mündet, welche in der Unterseite der Abdeckung 210 ausgebildet ist (siehe Figur 7). Entsprechend definiert das Auslassrohr 212 einen Bypassauslass 219, welcher aus einem zweiten Hohlraum 216 herausführt. Zwischen den Hohlräumen 215 und 216 ist ein langgezogener Vorsprung 217 ausgebildet, dessen Funktion nachstehend noch näher erläutert wird.

Auf ihrer Unterseite weist die Abdeckung 210 an ihren vier Ecken jeweils ein Eckelement 213 auf. An drei dieser Elemente schliesst sich nach unten hin jeweils ein Stift 214 an. Wie in den Figuren 5 und 6 erkennbar ist, ist der Sensorträger 220 zwischen den vier Eckelementen 213 aufgenommen. Er ist durch eine Klebung oder Verschweissung mit der Abdeckung 210 verbunden. Die Stifte 214 dienen zur Verbindung des Sensormoduls 20 mit einer Leiterplatte.

In den Figuren 9 und 10 ist der Sensorträger 220 alleine dargestellt. Auf seiner Unterseite weist der Sensorträger 220 eine metallene Trägerplatte 221 sowie mehrere Kontaktpads 222 auf. Auf der Oberseite weist der Sensorträger 220 eine längliche Ausnehmung 223 auf, in der der Durchflusssensor 22 freiliegend angeordnet ist. Nach der Anbringung des Sensorträgers 220 an der Abdeckung 210 ragt der Vorsprung 217 der Abdeckung 210 in die Ausnehmung 223 im Sensorträger 220 hinein und begrenzt somit gemeinsam mit dem Sensorträger 220 den Bypasskanal 21. Der Bypasskanal 21 verläuft zwischen dem Bypasseinlass 218 und dem Bypassauslass 219 vollständig im Inneren des Sensorgehäuses.

Das Einlassrohr 211 und das Auslassrohr 212 können z.B. dazu dienen, in die Bypassöffnungen 14, 15 im Hauptgehäuse 10 oder in entsprechende Aufnahmen in diesen Bypassöffnungen eingesteckt zu werden. Auf diese Weise kann eine Verbindung zwischen dem Hauptgehäuse 10 und dem Sensormodul 20 sehr einfach hergestellt werden.

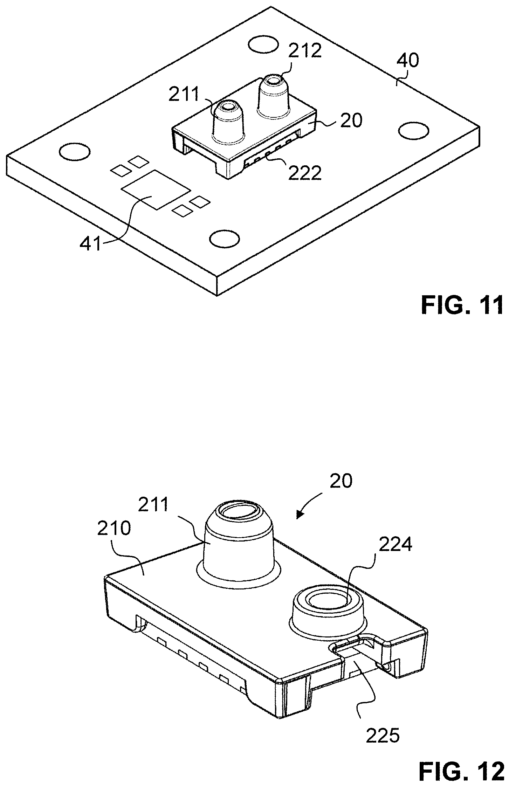

In der Figur 11 ist die Verbindung des Sensormoduls 20 mit einer Leiterplatte 40 illustriert. Das Sensormodul 20 ist mittels der Stifte 214 auf der Leiterplatte mechanisch fixiert. Elektrische Kontakte zwischen dem Sensormodul 20 und der Leiterplatte 40 sind durch die Kontaktpads 222 hergestellt. Auf der Leiterplatte 40 sind Schaltkreise der schon erwähnten Auswerteelektronik 41 angeordnet, welche lediglich schematisch angedeutet sind.

Eine weitere Ausführungsform eines Sensormoduls 20 ist in der Figur 12 illustriert. Dieses Sensormodul weist statt des Auslassrohrs 212 einen kurzen Blindrohrstutzen 224 auf, der an seinem Ende gasdicht verschlossen ist. Der Bypassauslass ist hier durch eine seitliche Öffnung 225 in der kurzen Stirnseite des Gehäuses 210 gebildet.

Selbstverständlich sind eine grosse Zahl von Modifikationen der vorliegenden Ausführungsbeispiele möglich, ohne den Bereich der Erfindung zu verlassen. So kann das Gehäuse des Sensormoduls 20 auch eine andere Form und einen anderen Aufbau aufweisen als in den Figuren 5-12. Auch die Verbindung zwischen dem Gaszählergehäuse 10 und dem Durchflusssensor 20 kann auf eine andere Weise als hier illustriert erfolgen.

**BEZUGSZEICHENLISTE**

| | | | |
|---|---|---|---|
| 10 | Hauptgehäuse | | |
| 11 | Gehäusewand | 40 | Leiterplatte |
| 12 | Einlass | 41 | Auswerteelektronik |
| 13 | Auslass | 42 | Kontaktelement |
| 14 | Einlassgewinde | | |
| 15 | Auslassgewinde | 50 | Durchführung |
| 14' | Einlassflansch | 51 | Leitung |
| 15' | Auslassflansch | 52 | Leitung |
| 16 | erste Bypassöffnung | 61 | Gaseinlassleitung |
| 17 | zweite Bypassöffnung | 62 | Gaseinlassleitung |
| 17 | Gehäuseinneres | | |
| | | 210 | Abdeckung |
| 20 | Sensormodul | 211 | Einlassrohr |
| 21 | Bypasskanal | 212 | Auslassrohr |
| 22 | Durchflusssensor | 213 | Eckelement |
| 23 | Bypassgehäuse | 214 | Stift |
| 24 | Dichtelement | 215 | Hohlraum |
| 25 | Einsatz | 216 | Hohlraum |
| 26 | Einlassrohr | 217 | Vorsprung |
| 27 | Auslassrohr | 218 | Bypasseinlass |
| | | 219 | Bypasseinlass |
| 30 | Durchströmungselement | 220 | Sensorträger |
| 31 | Strömungswiderstandselement | 221 | Trägerplatte |
| | | 222 | Kontaktpad |
| 32 | Austrittsöffnung | 223 | Ausnehmung |
| 33 | Eintrittsöffnung | 224 | Blindrohrstutzen |
| 34 | Dichtelement | 225 | seitliche Öffnung |
| 35 | Adapterstück | | |
| | | G | Gasstrom |

## Patentansprüche

1. Gasmessgerät für ein brennbares Gas (G), insbesondere Erdgas, aufweisend:
ein Hauptgehäuse (10), welches einen Gaseinlass (12) und einen Gasauslass (13) für das Gas (G) definiert und zwischen dem Gaseinlass (12) und dem Gasauslass (13) ein Gehäuseinneres (18) begrenzt;
mindestens ein Anschlusselement (14; 14'; 15; 15'), das am Hauptgehäuse (10) angeordnet ist, um den Gaseinlass (12) mit einer Gaseinlassleitung (61) und den Gasauslass (13) mit einer Gasauslassleitung (62) zu verbinden;
ein Strömungswiderstandselement (31), das zwischen dem Gaseinlass (12) und dem Gasauslass (13) im Gehäuseinneren (18) angeordnet ist und einen Hauptkanal für das durch das Gehäuseinnere (18) strömende Gas (G) begrenzt;
einen Bypasskanal (21), der stromaufwärts vom Strömungswiderstandselement (31) aus dem Hauptkanal abzweigt und im Bereich des Strömungswiderstandselements (31) oder stromabwärts davon in den Hauptkanal zurück mündet;
einen thermischen Durchflusssensor (22), um mindestens eine Kenngrösse des durch das Hauptgehäuse (10) hindurch fliessenden brennbaren Gases (G) zu bestimmen, wobei der thermische Durchflusssensor (22) angrenzend an den Bypasskanal (21) angeordnet ist,
wobei das Hauptgehäuse (10) eine erste und zweite Bypassöffnung (16, 17) aufweist,
wobei der Bypasskanal (21) zwischen der ersten und zweiten Bypassöffnung (16, 17) ausserhalb des Hauptgehäuses (10) verläuft, und
wobei der thermische Durchflusssensor (22) ausserhalb des Hauptgehäuses (10) angeordnet ist
**dadurch gekennzeichnet,**
**dass** das Gasmessgerät ein Durchströmungselement (30) aufweist, das derart innerhalb des Hauptgehäuses (10) angeordnet ist, dass das gesamte durch das Gasmessgerät durchgesetzte brennbare Gas (G) mindestens einen Abschnitt des Durchströmungselements (30) durchströmt, wobei das Durchströmungselement (30) das Strömungswiderstandselement (31) enthält, und
**dass** das Durchströmungselement (30) stromaufwärts vom Strömungswiderstandselement (31) eine Austrittsöffnung (32) aufweist, um einen Austritt eines Bypassstroms (B) aus dem Durchströmungselement (30) zum Bypasskanal (21) zu erlauben, und im Bereich des Strömungswiderstandselements (31) oder stromabwärts davon eine Eintrittsöffnung (33) aufweist, um einen Wiedereintritt des Bypassstroms (B) vom Bypasskanal (21) ins Durchströmungselement (30) zu erlauben.

2. Gasmessgerät nach Anspruch 1, wobei die Austrittsöffnung (32) und die Eintrittsöffnung (33) jeweils in einem Mantelwandbereich des Durchströmungselements (30) ausgebildet sind.

3. Gasmessgerät nach Anspruch 1 oder 2, welches zwischen dem Durchströmungselement (30) und dem Hauptgehäuse (10) im Bereich der Austrittsöffnung (32) und/oder im Bereich der Eintrittsöffnung (33) jeweils mindestens ein Dichtelement (34) aufweist.

4. Gasmessgerät nach einem der vorhergehenden Ansprüche, wobei das Hauptgehäuse (10) mindestens in denjenigen Bereichen, die unmittelbar das Gehäuseinnere (18) begrenzen, aus Metall gefertigt ist.

5. Gasmessgerät nach einem der vorhergehenden Ansprüche, wobei die erste und die zweite Bypassöffnung (16, 17) jeweils eine lichte Querschnittsfläche von höchstens 0.8 mm², vorzugsweise höchsten 0.2 mm² aufweisen.

6. Gasmessgerät nach einem der vorhergehenden Ansprüche,
wobei das Hauptgehäuse (10) eine Begrenzungswand (11) aufweist, die eine Wandinnenfläche und eine Wandaussenfläche definiert,
wobei die erste und/oder zweite Bypassöffnung (16, 17) durch die Begrenzungswand (11) hindurch verläuft, und
wobei die Wandinnenfläche und die Wandaussenfläche unmittelbar angrenzend an die erste und/oder zweite Bypassöffnung (14, 15) keine Erhebungen oder Vertiefungen aufweisen.

7. Gasmessgerät nach einem der vorhergehenden Ansprüche,
wobei das Gasmessgerät ein Bypassgehäuse (23) umfasst, das separat vom Hauptgehäuse (10) ausgebildet ist,
wobei der Bypasskanal (21) durch das Bypassgehäuse (23) hindurch verläuft, und
wobei der Durchflusssensor (22) im Bypassgehäuse (23) aufgenommen ist.

8. Gasmessgerät nach Anspruch 7, wobei das Bypassgehäuse (23) mindestens teilweise aus Kunststoff besteht und keine Metallummantelung aufweist.

9. Gasmessgerät nach einem der Ansprüche 7 oder 8, welches zwischen dem Bypassgehäuse (23) und dem Hauptgehäuse (10) im Bereich der ersten und/oder zweiten Bypassöffnung (16, 17) jeweils mindestens ein Dichtelement (24) aufweist.

10. Gasmessgerät nach einem der Ansprüche 7 bis 9, wobei das Bypassgehäuse (23) aufweist:
ein Einlassrohr (211), welches einen Bypasseinlass (218) des Bypasskanals (21) begrenzt und dazu ausgebildet ist, mit der ersten Bypassöffnung (14) des Hauptgehäuses (10) verbunden, insbesondere darin eingesteckt zu werden, und/oder
ein Auslassrohr (212), welches einen Bypassauslass (219) des Bypasskanals (21) begrenzt und dazu ausgebildet ist, mit der zweiten Bypassöffnung (15) des Hauptgehäuses (10) verbunden, insbesondere darin eingesteckt zu werden.

11. Gasmessgerät nach einem der vorhergehenden Ansprüche, wobei der thermische Durchflusssensor (22) ein mikrothermischer Durchflusssensor ist.

12. Gasmessgerät nach einem der vorhergehenden Ansprüche, welches mindestens einen elektronischen Schaltkreis (41) zur Auswertung von Signalen des thermischen Durchflusssensors (22) aufweist, wobei der elektronische Schaltkreis (41) mindestens eine der folgenden Vorrichtungen umfasst:
ein Datenspeicherelement, in dem Kalibrationsdaten gespeichert sind;
eine Integrationsvorrichtung zur Integration von Durchflusssignalen;
eine Berechnungsvorrichtung zur Berechnung einer Grösse, die mit dem Brennwert des Gases korreliert; und/oder
eine Datenkommunikationsvorrichtung zur drahtgebundenen oder drahtlosen Datenkommunikation.

13. Gasmessgerät nach Anspruch 12, wobei der thermische Durchflusssensor (22) und der elektronische Schaltkreis (41) ausserhalb des Hauptgehäuses (10) auf einer gemeinsamen Leiterplatte (40) montiert sind.

## Claims

1. Gas measuring device for a combustible gas (G), in particular natural gas, comprising:
a main housing (10) which defines a gas inlet (12) and a gas outlet (13) for the gas (G) and bounds a housing interior (18) between the gas inlet (12) and the gas outlet (13);
at least one connection element (14; 14'; 15; 15') which is arranged on the main housing (10) in order to connect the gas inlet (12) to a gas inlet line (61) and to connect the gas outlet (13) to a gas outlet line (62);
a flow resistance element (31) which is arranged between the gas inlet (12) and the gas outlet (13) in the housing interior (18) and bounds a main channel for the gas (G) flowing through the housing interior (18);
a bypass channel (21) which branches off from the main channel upstream of the flow resistance element (31) and opens out into the main channel in the region of the flow resistance element (31) or downstream of the latter;
a thermal flow sensor (22) for determining at least one characteristic variable of the combustible gas (G) flowing through the main housing (10), wherein the thermal flow sensor (22) is arranged adjacent to the bypass channel (21),
wherein the main housing (10) has a first bypass opening (16) and a second bypass opening (17),
wherein the bypass channel (21) runs outside the main housing (10) between the first and second bypass openings (16, 17), and
wherein the thermal flow sensor (22) is arranged outside the main housing (10),
**characterized**
**in that** the gas measuring device has a through-flow element (30) which is arranged inside the main housing (10) in such a manner that the entire combustible gas (G) which is pushed through the gas measuring device flows through at least one section of the through-flow element (30), wherein the through-flow element (30) comprises the flow resistance element (31), and
**in that** the through-flow element (30) has an exit opening (32) upstream of the flow resistance element (31) in order to allow a bypass flow (B) to exit the through-flow element (30) to the bypass channel (21), and has an entry opening (33) in the region of the flow resistance element (31) or downstream of the latter in order to allow the bypass flow (B) to re-enter the through-flow element (30) from the bypass channel (21).

2. Gas measuring device according to Claim 1, wherein the exit opening (32) and the entry opening (33) are each formed in an outer wall region of the through-flow element (30).

3. Gas measuring device according to Claim 1 or 2, which respectively has at least one sealing element (34) between the through-flow element (30) and the main housing (10) in the region of the exit opening (32) and/or in the region of the entry opening (33).

4. Gas measuring device according to one of the preceding claims, wherein the main housing (10) is produced from metal at least in those regions which directly bound the housing interior (18).

5. Gas measuring device according to one of the preceding claims, wherein the first and second bypass openings (16, 17) each have a clear cross-sectional area of at most 0.8 mm², preferably at most 0.2 mm².

6. Gas measuring device according to one of the preceding claims,
wherein the main housing (10) has a boundary wall (11) which defines a wall inner surface and a wall outer surface,
wherein the first and/or second bypass opening (16, 17) runs through the boundary wall (11), and
wherein the wall inner surface and the wall outer surface do not have any elevations or depressions directly adjacent to the first and/or second bypass opening (14, 15).

7. Gas measuring device according to one of the preceding claims,
wherein the gas measuring device comprises a bypass housing (23) which is formed separately from the main housing (10),
wherein the bypass channel (21) runs through the bypass housing (23), and
wherein the flow sensor (22) is accommodated in the bypass housing (23).

8. Gas measuring device according to Claim 7, wherein the bypass housing (23) at least partially consists of plastic and does not have a metal sheath.

9. Gas measuring device according to either of Claims 7 and 8, which respectively has at least one sealing element (24) between the bypass housing (23) and the main housing (10) in the region of the first and/or second bypass opening (16, 17).

10. Gas measuring device according to one of Claims 7 to 9, wherein the bypass housing (23) has:
an inlet tube (211) which bounds a bypass inlet (218) of the bypass channel (21) and is designed to be connected to the first bypass opening (14) of the main housing (10), in particular to be inserted therein, and/or
an outlet tube (212) which bounds a bypass outlet (219) of the bypass channel (21) and is designed to be connected to the second bypass opening (15) of the main housing (10), in particular to be inserted therein.

11. Gas measuring device according to one of the preceding claims, wherein the thermal flow sensor (22) is a micro-thermal flow sensor.

12. Gas measuring device according to one of the preceding claims, which has at least one electronic circuit (41) for evaluating signals from the thermal flow sensor (22), wherein the electronic circuit (41) comprises at least one of the following apparatuses:
a data storage element which stores calibration data;
an integration apparatus for integrating flow signals;
a calculation apparatus for calculating a variable which correlates with the calorific value of the gas; and/or
a data communication apparatus for wired or wireless data communication.

13. Gas measuring device according to Claim 12, wherein the thermal flow sensor (22) and the electronic circuit (41) are mounted on a common printed circuit board (40) outside the main housing (10).

## Revendications

1. Dispositif de mesure de gaz pour un gaz combustible (G), en particulier du gaz naturel, comprenant:
un boîtier principal (10), lequel définit une entrée de gaz (12) et une sortie de gaz (13) pour le gaz (G) et délimite un intérieur de boîtier (18) entre l'entrée de gaz (12) et la sortie de gaz (13);
au moins un élément de connexion (14; 14 '; 15; 15') qui est disposé sur le boîtier principal (10), afin de connecter l'entrée de gaz (12) à une ligne d'entrée de gaz (61) et la sortie de gaz (13) à une ligne de sortie de gaz (62);
un élément de résistance à l'écoulement (31), qui est disposé entre l'entrée de gaz (12) et la sortie de gaz (13) à l'intérieur du boîtier (18) et délimite un canal principal pour le gaz (G) circulant à travers l'intérieur du boîtier (18);
un conduit de dérivation (21), qui dérive du conduit principal en amont de l'élément de résistance à l'écoulement (31) et débouche à nouveau dans le conduit principal dans la région de l'élément de résistance à l'écoulement (31) ou en aval de celui-ci;
un capteur de débit thermique (22), pour déterminer au moins un paramètre du gaz combustible (G) circulant à travers le boîtier principal (10), le capteur de débit thermique (22) étant disposé adjacent au canal de dérivation (21),
dans lequel le boîtier principal (10) présente une première et une deuxième ouverture de dérivation (16, 17),
dans lequel le canal de dérivation (21) s'étend entre les première et deuxième ouvertures de dérivation (16, 17) à l'extérieur du boîtier principal (10), et
que le capteur de débit thermique (22) est agencé à l'extérieur le boîtier principal (10),
**caractérisé en ce que**
le dispositif de mesure de gaz présente un élément d'écoulement (30) qui est disposé à l'intérieur du boîtier principal (10) de telle sorte que l'intégralité du gaz combustible (G) traversant le dispositif de mesure de gaz s'écoule à travers au moins une section de l'élément d'écoulement (30), l'élément d'écoulement (30) contenant l'élément de résistance à l'écoulement (31), et
l'élément d'écoulement (30) présente, en amont de l'élément de résistance à l'écoulement (31), une ouverture de sortie (32) pour permettre une sortie d'un flux de dérivation (B) de l'élément d'écoulement (30) vers le canal de dérivation (21), et présente, dans la zone de l'élément de résistance à l'écoulement (31) ou en aval de celui-ci, une ouverture d'entrée (33) afin de permettre à un flux de dérivation (B) de retourner dans le canal de dérivation (21) dans l'élément d'écoulement (30).

2. Dispositif de mesure de gaz selon la revendication 1, dans lequel l'ouverture de sortie (32) et l'ouverture d'entrée (33) sont respectivement formées dans une zone de surface de gaine de l'élément d'écoulement (30).

3. Dispositif de mesure de gaz selon la revendication 1 ou 2, lequel présente au moins un élément d'étanchéité (34) entre l'élément d'écoulement (30) et le boîtier principal (10) dans la zone de l'ouverture de sortie (32) et / ou dans la zone de l'ouverture d'entrée (33).

4. Dispositif de mesure de gaz selon l'une des revendications précédentes, dans lequel le boîtier principal (10) est en métal au moins dans les zones qui délimitent directement l'intérieur du boîtier (18).

5. Dispositif de mesure de gaz selon l'une des revendications précédentes, dans lequel les première et seconde ouvertures de dérivation (16, 17) ont chacune une aire de section transversale claire d'au plus 0,8 mm², de préférence d'au plus 0,2 mm².

6. Dispositif de mesure de gaz selon l'une des revendications précédentes,
dans lequel le boîtier principal (10) présente une paroi limite (11), qui définit une surface de paroi intérieure et une surface de paroi extérieure,
dans lequel la première et / ou la seconde ouverture de dérivation (16, 17) traverse la paroi limite (11), et
dans lequel la surface de la paroi intérieure et la surface de la paroi extérieure immédiatement adjacentes à la première et / ou la deuxième ouverture de dérivation (14, 15) ne présentent pas d'élévations ou dépressions.

7. Dispositif de mesure de gaz selon l'une des revendications précédentes,
dans lequel le dispositif de mesure de gaz comprend un boîtier de dérivation (23), qui est formé séparément du boîtier principal (10),
dans lequel le canal de dérivation (21) s'étend à travers le boîtier de dérivation (23), et
dans lequel le capteur de débit (22) est logé dans le boîtier de dérivation (23).

8. Dispositif de mesure de gaz selon la revendication 7, dans lequel le boîtier de dérivation (23) est constitué au moins partiellement de plastique et ne présente pas de gaine métallique.

9. Dispositif de mesure de gaz selon l'une des revendications 7 ou 8, lequel présente respectivement au moins un élément d'étanchéité (24) entre le boîtier de dérivation (23) et le boîtier principal (10) dans la zone de la première et / ou de la deuxième ouverture de dérivation (16, 17).

10. Dispositif de mesure de gaz selon l'une des revendications 7 à 9, dans lequel le boîtier de dérivation (23) comprend:
un tuyau d'entrée (211), lequel délimite une entrée de dérivation (218) du canal de dérivation (21) et est conçu pour communiquer avec la première ouverture de dérivation (14) du boîtier principal (10), particulièrement pour y être inséré, et / ou
un tuyau de sortie (212), lequel délimite une sortie de dérivation (219) du canal de dérivation (21) et est conçu pour communiquer avec la deuxième ouverture de dérivation (15) du boîtier principal (10), particulièrement pour y être inséré.

11. Dispositif de mesure de gaz selon l'une des revendications précédentes, dans lequel le capteur de débit thermique (22) est un capteur de débit microthermique.

12. Dispositif de mesure de gaz selon l'une des revendications précédentes, qui présente au moins un circuit électronique (41) pour évaluer des signaux du capteur de débit thermique (22), dans lequel le circuit électronique (41) comprend au moins l'un des dispositifs suivants:
un élément de stockage de données, dans lequel sont stockées des données d'étalonnage;
un dispositif d'intégration pour intégrer des signaux de flux;
un dispositif de calcul pour calculer une quantité qui correspond à la valeur calorifique du gaz; et / ou
un dispositif de communication de données pour une communication de données filaire ou sans fil.

13. Dispositif de mesure de gaz selon la revendication 12, dans lequel le capteur de débit thermique (22) et le circuit électronique (41) sont montés à l'extérieur du boîtier principal (10) sur une carte de circuit imprimé commune (40).
